# EUROPÄISCHE PATENTANMELDUNG

(11) **EP 1 295 852 A1**
(43) Veröffentlichungstag der Anmeldung: **26.03.2003**
(21) Anmeldenummer: 01890274.2
(22) Anmeldetag: 25.09.2001
(51) Int. Cl.: C02F 1/04, C02F 1/14, B01D 1/30, B01D 1/26, B01D 5/00, B01D 3/10

(54) **Anlage zur Entsalzung oder Reinigung von Rohwasser mittels Destillation**

(71) Anmelder: Markopulos, Johannes, 2512 Tribuswinkel (AT)
(72) Erfinder: Markopulos, Johannes, 2512 Tribuswinkel (AT)
(74) Vertreter: Weiser, Andreas, Dipl.-Ing.

(57) **Zusammenfassung**

Anlage zur Entsalzung oder Reinigung von Rohwasser mittels Destillation, mit einem Verdampfungsgefäß (1) mit einem Heizkörper (18, 18', 18") zur Verdampfung des Rohwassers von der flüssigen Phase (4) in die Dampfphase (6), und einem nachgeschalteten Kondensierer (20, 20', 20") zur Kondensation der Dampfphase (6) zu entsalztem bzw. gereinigtem Wasser, wobei der Kondensierer (20, 20', 20") in die flüssige Phase (4) des Verdampfungsgefäßes (1) zwecks Wärmeaustauschs eintaucht, der Heizkörper (18, 18', 18") im Bereich der Grenzschicht (5) zwischen flüssiger Phase (4) und Dampfphase (6) angeordnet ist und der Kondensierer (20, 20', 20") unterhalb des Heizkörpers (18, 18', 18") liegt.

## Beschreibung

Die vorliegende Erfindung betrifft eine Anlage zur Entsalzung oder Reinigung von Rohwasser mittels Destillation, mit einem Verdampfungsgefäß mit einem Heizkörper zur Verdampfung des Rohwassers von der flüssigen Phase in die Dampfphase, und einem nachgeschalteten Kondensierer zur Kondensation der Dampfphase zu entsalztem bzw. gereinigtem Wasser, wobei der Kondensierer in die flüssige Phase des Verdampfungsgefäßes zwecks Wärmeaustauschs eintaucht.

Unter "Rohwasser" wird in der vorliegenden Beschreibung jede Art von zu reinigendem oder zu entsalzendem Wasser verstanden, z.B. Meerwasser, Brackwasser, kontaminiertes Süßwasser, Regenwasser, Brunnenwasser, Flußwasser, Abwasser usw.

Aus der US 6 051 111 ist eine mittels hochfrequenzunterstützter Verdampfung arbeitende Entsalzungsanlage bekannt, bei welcher das Kondensationsgefäß im Inneren des Verdampfungsgefäßes liegt und in die flüssige Phase des Verdampfungsgefäßes eintaucht, sodaß die im Kondensat vorhandene Restwärme durch Wärmeaustausch mit dem Verdampfungsgefäß ausgenützt werden kann.

Die Erfindung setzt sich zum Ziel, eine derartige Anlage zu schaffen, die eine günstigere Energiebilanz hat als die bisher bekannten Anlagen. Dieses Ziel wird erfindungsgemäß dadurch erreicht, daß der Heizkörper im Bereich der Grenzschicht zwischen flüssiger Phase und Dampfphase angeordnet ist und der Kondensierer unterhalb des Heizkörpers liegt.

Die Anordnung des Heizkörpers im Bereich der Grenzschicht zwischen flüssiger Phase und Dampfphase bringt die Wärme genau dort ein, wo sie für die Phasenumwandlung benötigt wird, und erzeugt einen Temperaturgradienten in der flüssigen Phase, welcher unmittelbar zum Wärmeaustausch mit dem unterhalb des Heizkörpers liegenden Kondensierer ausgenützt werden kann. Die Anliege erzielt damit bei geringen Abmessungen einen hohen Wirkungsgrad.

Der Heizkörper kann in beliebiger Form vorliegen, z.B. als Rohrschlange, Stab usw. Der Heizkörper kann die Grenzschicht zwischen flüssiger Phase und Dampfphase durchdringen oder im Bereich der Grenzschicht auf der einen oder der anderen Seite derselben liegen. Bevorzugt wird vorgesehen, daß der Heizkörper sich knapp unterhalb der genannten Grenzschicht parallel zu dieser erstreckt. Dies gewährleistet eine optimale Verdampfung an der Grenzschicht.

Die Anlage kann sowohl chargenweise als auch kontinuierlich im Durchlauf betrieben werden. Die zweite Variante wird bevorzugt, wobei das Verdampfungsgefäß und der Kondensierer zweckmäßigerweise im Gegenstrom durchströmt sind. Dies nützt den Temperaturgradienten im Verdampfungsgefäß für eine in Richtung nach unten fortschreitende Kondensation optimal aus.

Eine besonders vorteilhafte Ausführungsform der Erfindung zeichnet sich dadurch aus, daß zumindest zwei übereinander angeordnete Heizkörper vorgesehen sind, zwischen denen jeweils ein Kondensierer liegt, wobei die Temperatur der Heizkörper von Heizkörper zu Heizkörper nach unten hin abnimmt, und/oder daß zumindest zwei übereinander angeordnete Kondensierer vorgesehen sind, zwischen denen jeweils ein Heizkörper liegt, wobei die Kondensierer untereinander in Serie geschaltet sind. Auf diese Weise ergibt sich eine fortlaufende Verzahnung der Heizkörper und Kondensierer von oben nach unten unter Beibehaltung des Temperaturgradienten, sodaß das Rohwasser von unten nach oben erwärmt und die kondensierende bzw. kondensierte Dampfphase im Gegenstrom von oben nach unten abgekühlt wird.

Im Rahmen der Erfindung können Heizkörper, die mit jeder beliebigen Art von-Energie betrieben werden, verwendet werden, z.B. Sonnenenergie, Windenergie, Energie aus Biomasse, geothermischer Energie, photovoltaischer Energie, Energie aus Wärmeabfällen der Industrie oder elektrischem Strom "aus der Steckdose". Besonders vorteilhaft ist es, wenn zumindest ein Heizkörper von einem Wärmeträgermedium durchströmt ist, das im Kreislauf durch einen Sonnenkollektor und/oder Biomassekessel geführt ist. Als Wärmeträgermedium kann z.B. Heißwasser, Heißöl, heiße Druckluft, Dampf od. dgl. verwendet werden. Eine andere vorteilhafte Variante besteht darin, daß zumindest ein Heizkörper eine elektrische Widerstandsheizung ist. Wenn mehrere Heizkörper vorgesehen sind, können sie auch mit unterschiedlichen Energieformen betrieben werden, wobei auf die Nenntemperatur des jeweiligen Heizkörpers Rücksicht genommen werden kann: So können z.B. von einem Sonnenkollektor über ein Wärmeträgermedium betriebene Heizkörper für die unteren, kälteren Heizkörper (z.B. 55°C bis 70°C) verwendet werden, während z.B. für den obersten, im Bereich der Grenzschicht angeordneten Heizkörper eine elektrische Widerstandsheizung mit hoher Nenntemperatur (über 100°C) eingesetzt wird.

In jedem Fall ist es besonders vorteilhaft, wenn dem Verdampfungsgefäß ein Vorbecken vorgeschaltet ist, wobei das Verdampfungsgefäß zwecks Wärmeaustauschs in das Vorbecken eintaucht. Dadurch kann die Abwärme des Verdampfungsgefäßes zur Vorerwärmung des Rohwassers im Vorbecken ausgenützt werden. Zweckmäßig ist es hier, zwischen Verdampfungsgefäß und Vorbekken eine Isolationsschicht vorzusehen, mit welcher das Ausmaß des Wärmeaustauschs und der Temperaturgradient zwischen Verdampfungsgefäß und Vorbecken festgelegt werden können.

Gemäß einem bevorzugten Merkmal der Erfindung wird der Eingang des Kondensierers durch eine Öffnung an der Decke des Verdampfungsgefäßes gebildet, in welche die Dampfphase auf Grund des entstehenden Dampfdruckes eintreten kann.

Bevorzugt ist der Ausgang des Kondensierers an ein Überlaufrohr angeschlossen, welches durch das Vorbecken geführt ist, sodaß die Restwärme noch besser rezykliert werden kann.

Die Verdampfung kann nicht nur bei atmosphärischem Druck bzw. (durch den Dampfdruck bedingtem) geringfügigem Überdruck erfolgen, sondern auch unter Unterdruck. Eine bevorzugte Variante der Erfindung zeichnet sich daher dadurch aus, daß eine Unterdruckpumpe vorgesehen ist, welche einen Unterdruck im Verdampfungsgefäß errichtet. Diese Ausführungsform eignet sich besonders für den Betrieb mit solarkollektor- oder biomassekesselbetriebenen Heizkörpern, deren Nenntemperatur beispielsweise nur etwa 60-70°C erreicht, da der Siedepunkt unter Unterdruck entsprechend reduziert ist.

Im Unterdruckbetrieb kann es günstig sein, daß von der Decke des Verdampfungsgefäßes entsalztes bzw. gereinigtes Wasser, Kühlluft od.dgl. kondensationsförderndes Mittel in die Dampfphase eingespritzt wird, wobei der Eingang des Kondensierers durch einen Auffangtrichter gebildet wird, der bevorzugt unterhalb eines an der Decke des Verdampfungsgefäßes angeordneten Abtropfkegels oder -kegelstumpfes angeordnet ist. Dadurch findet bereits im Verdampfungsraum eine Umwandlung der Dampfphase in Kondensat statt, welches bevorzugt direkt in den Auffangtrichter fällt. Dies erhöht den Durchsatz der Anlage, weil das Abziehen der Dampfphase im Unterdruckbetrieb auf Grund der geringeren spezifischen Masse von Unterdruckdampf sonst einen geringeren Durchsatz zur Folge hätte.

Die Menge, die Temperatur und der Druck des kondensationsfördernden Mittels werden zweckmäßig so gewählt, daß sich der Unterdruckzustand und die Temperatur im Verdampfungsraum gerade um so viel ändern, daß die gewünschte Kondensation erfolgt. Bevorzugt wird dabei der Unterdruck im Verdampfungsraum nicht vollständig abgebaut. Durch die weitgehend adiabate Zustandsänderung wird bei der Kondensation Verdampfungswärme rückgewonnen, welche dem System rückgeführt wird. Die Wärmerückfuhr kann noch gefördert werden, indem der Eingang des Kondensierers unmittelbar nach dem Auffangtrichter in Form einer kurzen Rohrschlange ausgebildet ist, welche die Grenzschicht zwischen Dampfphase und flüssiger Phase durchsetzt und bevorzugt teilweise sogar oberhalb des Heizkörpers liegt.

Bevorzugt erfolgt das Einspritzen des kondensationsfördernden Mittels impulsweise in zeitlichen Abständen. Dadurch kann ein stufenweiser Betrieb der Anlage im Verdampfungsraum errichtet werden, und zwar mit folgenden Stufen: a) Unterdruckaufbau, b) Verdampfung, c) Einspritzung, d) Phasenänderung von Dampf zu Wasser und e) Austrag des erzeugten Wassers.

Besonders vorteilhaft ist es, wenn mehrere Auffangtrichter mit zugeordneten Abtropfkegeln bzw. -kegelstümpfen nebeneinander angeordnet sind, die durch geringfügig in die flüssige Phase eintauchende Schotte voneinander getrennt sind. Dadurch kann nicht nur die Leistung erhöht werden, sondern insbesondere in dem Fall, wo das Einspritzen des kondensationsfördernden Mittels in die Dampfphase nicht kontinuierlich, sondern stoßweise erfolgt, dieses Einspritzen zellenweise aufeinanderfolgend durchgeführt werden. Dies hat zum einen den Vorteil, daß die zum Einspritzen verwendete Pumpe in den Impulspausen einer Zelle nicht gegen ein geschlossenes Ventil arbeiten muß, sondern eben einfach eine andere Zelle beaufschlagt, und daß zum anderen eine allenfalls an den Ausgang des Kondensierers angeschlossene Saugpumpe nie trocken laufen kann.

In jedem Fall ist es bei einem Unterdruckbetrieb besonders günstig, wenn das Verdampfungsgefäß aus einem Vorrat mit Rohwasser beschickt ist, der sich auf Umgebungsdruck befindet, und das Verdampfungsgefäß in einer solchen Höhe über dem Vorrat angeordnet ist, daß die Unterdruckpumpe das Flüssigkeitsniveau der flüssigen Phase im Verdampfungsgefäß gewährleistet. Dadurch wird das Phänomen des hydrostatischen Druckes bzw. der "barometrischen Höhe" ausgenutzt, wonach eine ansaugende Unterdruckpumpe eine Wassersäule nicht über die Höhe des Umgebungsdruckes anheben kann, ohne daß die Verdampfung eintritt. Der Füllstand im Verdampfungsgefäß kann auf diese Weise ohne zusätzliche Druckregelventile eingestellt werden.

Die Erfindung wird nachstehend anhand von in den Zeichnungen dargestellten Ausführungsbeispielen näher erläutert. In den Zeichnungen zeigt
Fig. 1a eine erste Ausführungsform der erfindungsgemäßen Anlage in einem schematischen Längsschnitt, ergänzt durch schaltbildlich dargestellte Komponenten,
Fig. 1b eine alternative Ausführungsform für den Kondensierer der Anlage von Fig. 1a,
Fig. 1c eine alternative Ausführungsform für die Heizeinrichtung der Anlage von Fig. 1a,
die Fig. 2a und 2b schematische Draufsichten auf zwei verschiedene Ausführungsformen der Anlage von Fig. 1a,
die Fig. 3a und 3b verschiedene Ausführungsformen von Rohrleitungen für die Anlage von Fig. 1a im Schnitt,
Fig. 4 eine alternative Ausführungsform der erfindungsgemäßen Anlage in schematischem Längsschnitt,
Fig. 5 eine weitere alternative Ausführungsform der erfindungsgemäßen Anlage in schematischem Längsschnitt und
Fig. 6 eine Draufsicht auf die Anlage von Fig. 5.

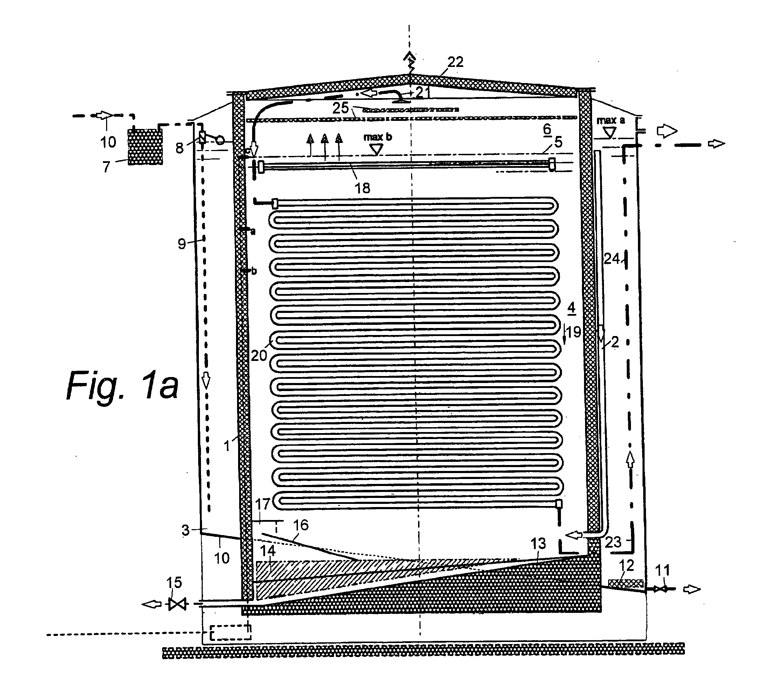

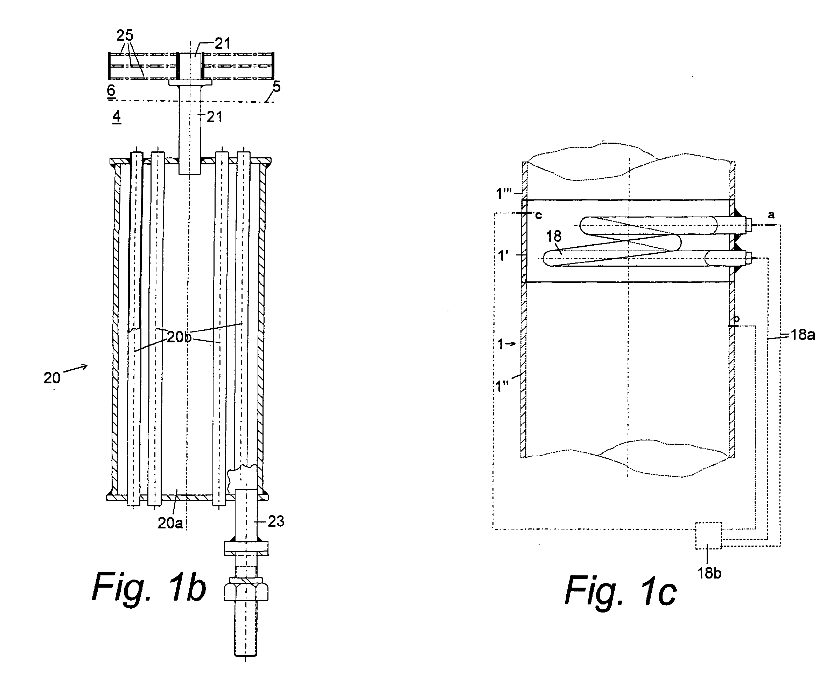

Fig. 1a zeigt eine erste Ausführungsform der Anlage zur Entsalzung oder Reinigung von Rohwasser mittels Destillation, welche sowohl in großindustriellem Maßstab (Süßwasserproduktionsleistung 1 bis 24.000 m³ pro Tag) als auch in einer kleinen kompakten Variante für den Tischbetrieb (Süßwasserproduktionsleistung 5 bis 20 Liter pro Stunde) geeignet ist. Die Anlage umfaßt ein Verdampfungsgefäß 1, dem zu reinigendes bzw. zu entsalzendes Rohwasser über eine Zufuhrleitung 2 aus einem Vorbecken 3 zugeführt wird.

Das Rohwasser bildet im Verdampfungsgefäß 1 eine flüssige Phase 4 bis zu einer Grenzschicht 5 auf einem Niveau max b. Über der Grenzschicht 5 bzw. dem Flüssigkeitsniveau max b verbleibt ein Raum ("Verdampfungsraum") für eine durch Verdampfung gebildete Dampfphase 6.

Das Verdampfungsgefäß 1 ist im Inneren des Vorbeckens 3 angeordnet bzw. wird von diesem umgeben. Dadurch kann die vom Verdampfungsgefäß 1 abgegebene Wärme im Wärmeaustausch an das Vorbecken 3 abgegeben werden. Zwischen Verdampfungsgefäß 1 und Vorbecken 3 kann eine Wärmeisolationsschicht (nicht gezeigt) angeordnet werden, deren Wärmedämmeigenschaften so gewählt werden, daß ein vorgegebener Wärmeaustausch bzw. Temperaturgradient zwischen dem Verdampfungsgefäß 1 und dem Vorbecken 3 erreicht wird.

Das Vorbecken 3 wird über einen Filter 7, einen Schwimmerschalter 8 und eine Einlaufleitung 9 mit Rohwasser aus einem Anschluß 10 beschickt. Der Anschluß 10 wird je nach Anwendungsfall von Meerwasser, Flußwasser, Brunnenwasser usw. gespeist. Der Schwimmerschalter 8 hält dabei im Vorbecken 3 ein Füllstandsniveau max a aufrecht.

Der Boden 10 des Vorbeckens 3 ist in Richtung von der Einlaufleitung 9 wegführend nach unten geneigt, und die Einlaufleitung 9 mündet in der Nähe der höchsten Stelle des Bodens 10 in das Vorbecken 3. An der tiefsten Stelle des Bodens 10 befindet sich ein verschließbarer Ablauf 11, der in regelmäßigen Abständen zum Austragen allfälliger Ablagerungen im Vorbecken 3 (schematisch bei 12 dargestellt) geöffnet werden kann.

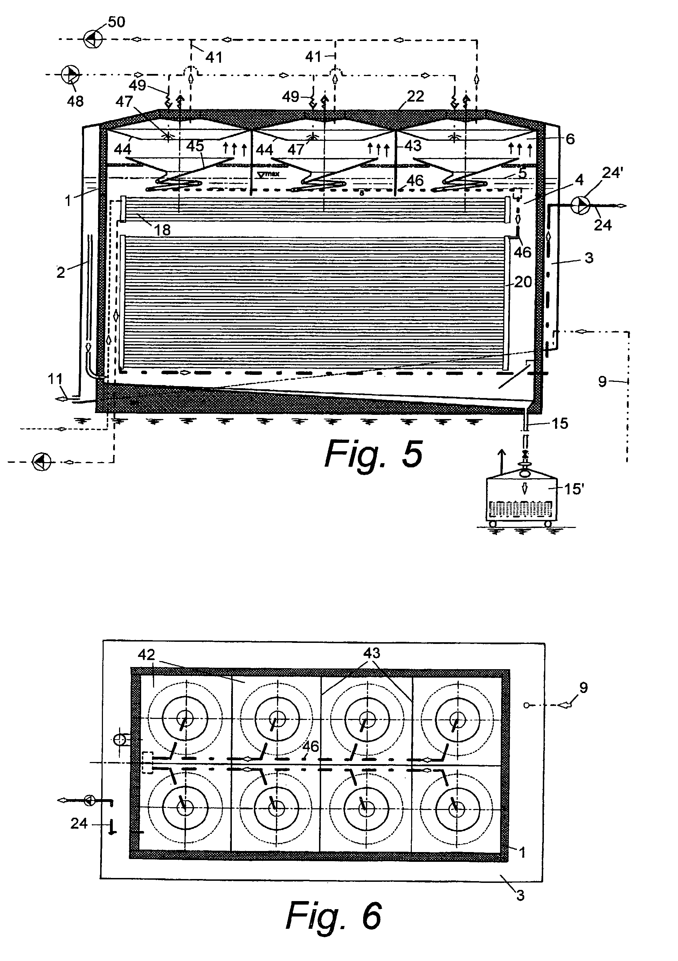

In gleicher Weise ist der Boden 13 des Verdampfungsgefäßes 1 in Richtung von der Mündung der Zufuhrleitung 2 wegführend nach unten geneigt, um die Ablagerung von Sole, Schwebeteilchen, Verunreinigungen usw. des Rohwassers (bei 14 schematisch dargestellt) an der tiefsten Stelle des Bodens 13 zu begünstigen. An dieser Stelle ist ein verschließbarer Ablauf 15 zum kontinuierlichen oder chargenweisen (z.B. mit Hilfe eines Auffangbehälters 15', siehe Fig. 5) Austragen der Ablagerungen 14 angeordnet. Im Bereich oberhalb des Ablaufs 15 sind Strömungsablenkbleche bzw. -schikanen 16, 17 montiert, um die Strömung zu beruhigen und das Absetzen der Ablagerungen 14 zu fördern.

Das Zufuhrrohr 2 geht unterhalb des Flüssigkeitsniveaus max a diametral gegenüber der Einmündung der Einlaufleitung 9 vom Vorbecken 3 aus und mündet über der höchsten Stelle des Bodens 13 in das Verdampfungsgefäß 1. Wie in Fig. 1a gezeigt, sind damit die Böden 10 und 13 des Vorbeckens 3 bzw. Verdampfungsgefäßes 1 zueinander entgegengesetzt geneigt.

Im Inneren des Verdampfungsgefäßes 1 und knapp unterhalb der Grenzschicht 5 zwischen flüssiger Phase 4 und Dampfphase 6 ist ein Heizkörper 18 montiert. Der Heizkörper 18 bringt die unmittelbar im Bereich der Grenzschicht 5 liegenden Rohwasserschichten zum Sieden, sodaß sie in die Dampfphase 6 übergehen. Zwischen Heizkörper 18 und Boden 13 des Verdampfungsgefäßes 1 stellt sich dabei ein Temperaturgradient mit einer nach unten abfallenden Temperatur ein, beispielsweise von ca. 100°C im Bereich des Heizkörpers 18 bis zu ca. 20°C im Bereich des Bodens 13.

In diesem Bereich abfallender Temperatur ist ein Kondensierer 20 zum Kondensieren der Dampfphase 6 angeordnet. Bei der Variante von Fig. 1 ist der Kondensierer 20 in Form einer Rohrschlange ausgeführt und der Eingang des Kondensierers 20 wird einfach durch deren Öffnung 21 in der Nähe der Decke 22 des Verdampfungsgefäßes 1 gebildet. Im Verdampfungsgefäß 1 sind im Bereich vor der Eingangsöffnung 21 Strömungsschikanen 25, z.B. Netze, Gitter, Bleche usw., angeordnet. Die Strömungsschikanen 25 verhindern, daß siedende, hochspritzende Tropfen aus der flüssigen Phase 4 in die Öffnung 21 mitgerissen werden.

Der Ausgang 23 des Kondensierers 20 durchsetzt die Wand des Verdampfungsgefäßes 1 und ist an ein Überlaufrohr 24 angeschlossen, welches das Flüssigkeitsniveau des Kondensierers 20 aufrechterhält. Das Überlaufrohr 24 kann wie dargestellt durch das Vorbecken 3 geführt sein, um Restwärme aus dem Kondensat an das Rohwasser im Vorbecken 3 abzugeben.

Im Betrieb strömt Rohwasser im Verdampfungsgefäß 1 in der flüssigen Phase 4 von unten nach oben, wogegen entsalztes bzw. gereinigtes Kondensat der Dampfphase 6 im Kondensierer 20 von oben nach unten strömt, d.h. im Gegenstrom. Der Kondensierer 20 ist aus gut wärmeleitendem Material gefertigt, sodaß ein inniger Wärmeaustausch zwischen Kondensat im Inneren des Kondensierers 20 und Rohwasser im Verdampfungsgefäß 1 erfolgt. Die flüssige Phase 4 wird dadurch von unten nach oben fortschreitend stärker erwärmt, während das Kondensat fortschreitend von oben nach unten abgekühlt wird.

Bei der Ausführungsform von Fig. 1a wird als Heizkörper 18 ein elektrisch betriebener Widerstandsheizstab, eine Widerstandsheizspirale usw. verwendet. Es versteht sich, daß auch jede andere Form von Heizelement als Heizkörper 18 verwendet werden kann, wie weiter unten noch erläutert wird.

Es ist zweckmäßig, aber nicht zwingend, wenn bei der Anlage von Fig. 1a die Verdampfung im wesentlichen bei atmosphärischem Druck stattfindet bzw. bei einem geringfügigen, durch den Dampfdruck bedingten Überdruck. Der Dampfdruck hat zur Folge, daß das Flüssigkeitsniveau max b im Verdampfungsgefäß 1 geringfügig tiefer liegt als das Flüssigkeitsniveau max a im Vorbekken 3. Die Verdampfung kann alternativ auch bei Unterdruckbedingungen erfolgen, wie später noch beschrieben wird.

Fig. 1b zeigt eine alternative Ausführungsform für den Kondensierer 20. Der Kondensierer 20 besitzt hier im wesentlichen die Form eines Hohlzylinders 20a, welcher koaxial und mit Abstand in das Verdampfungsgefäß 1 (in Fig. 1b nicht dargestellt) eingesetzt wird, z.B. von oben her nach Abnehmen der Decke 22. Der Eingang 21 wird hier durch ein kurzes Rohrstück gebildet, welches am oberen Ende in den Hohlzylinder 20a einmündet und in einem Abstand von der Decke 22 endet, so daß die Dampfphase 6 dort eintreten kann. Die Strömungsschikanen 25 werden vom oberen Ende des den Eingang 21 bildenden Rohrstückes getragen.

Der Hohlzylinder 20a ist von beidseitig offenen Rohren 20b vertikal durchsetzt. In den Rohren 20b strömt die flüssige Phase 4 von unten nach oben im Verdampfungsgefäß 1, d.h. der Innenraum der Rohre 20b zählt zum Innenraum des Verdampfungsgefäßes 1.

Vom unteren Ende des Hohlzylinders 20a geht der Ausgang 23 des Kondensierers 20 aus. Die gesamte Anordnung von Fig. 1b kann als ein Modul in das Verdampfungsgefäß 1 eingesetzt werden.

Fig. 1c zeigt eine alternative Ausführungsform für die Heizvorrichtung 18 von Fig. 1a. Die Heizvorrichtung 18 ist hier eine elektrische Widerstandsheizspirale, welche zwecks Anschluß an elektrische Versorgungsleitungen 18a einen Wandabschnitt 1' des Verdampfungsgefäßes 1 durchsetzt. Ferner sind eine elektrische Steuerung 18b in Verbindung mit einem Thermostat a, einem Flüssigkeitsniveaufühler b und einem Temperatursensor c zur Steuerung der Temperatur des Heizkörpers 18 gezeigt.

Der Wandabschnitt 1', welcher vom Heizkörper 18 zwecks Abstützung desselben durchsetzt ist, kann als ein gesondertes ringförmiges Modul ausgebildet sein, welches bei der Montage der Anlage entsprechend auf einen unteren Teil 1" des Verdampfungsgefäßes 1 aufgesteckt wird.

In Verbindung mit dem Kondensierer 20 von Fig. 1b gestaltet sich die Montage der Anlage bevorzugt wie folgt. Der Holzzylinder 20a mit seinem den Eingang 21 bildenden Rohrstück wird in den unteren Teil 1" des Verdampfungsgefäßes 1 eingeführt. Der ringförmige Wandabschnitt 1' mit dem Heizkörper 18 wird dann auf den unteren Teil 1" aufgesetzt, wobei der Eingang 21 durch die Spirale des Heizkörpers 18 hindurchtritt. Anschließend werden die Schikanen 25 am Eingang 21 montiert, und ein oberer Abschnitt 1"' das Verdampfungsgefäßes 1 mitsamt der Dekke 22 (in Fig. 1c nicht dargestellt) wird aufgesetzt, um das Verdampfungsgefäß 1 zu schließen.

Wenn mehr als ein Heizkörper 18 eingebaut werden soll, können mehrere ringförmige Abschnitte 1a mit dem Heizkörper 18 verwendet werden.

Das Verdampfungsgefäß 1 kann dann direkt oder unter Zwischenschaltung einer wärmeisolierenden Schicht (nicht dargestellt) im Vorbecken 3 (falls vorhanden) montiert werden.

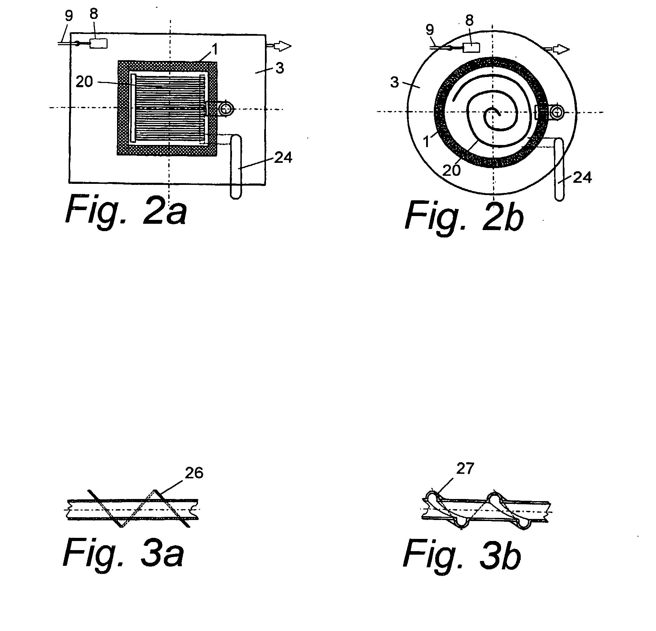

Fig. 2a zeigt eine mögliche Querschnittsform für die Anlage von Fig. 1a mit einem rechteckigen Vorbecken 3 und einem rechteckigen Verdampfungsgefäß 1, in dem sich ein im wesentlichen rechteckiger Kondensierer 20 befindet. Der Kondensierer 20 kann dabei eine zu einem dreidimensionalen Gebilde gefaltete Rohrschlange sein, ein mehrfach durchbrochener Körper in der Art eines Lamellen-Heizkörpers, der Kondensierer von Fig. 1b, usw. Fig. 2b zeigt eine alternative Ausführungsform, bei welcher das Vorbecken 3, das Verdampfungsgefäß 1 und der Kondensierer 20 rund sind; der Kondensierer 20 kann hier beispielsweise die Form einer spiralförmig aufgewickelten Rohrschlange haben. Auch Kombinationen der Ausführungsformen der Fig. 2a und 2b sind möglich, beispielsweise ein rundes Verdampfungsgefäß 1 in einem eckigen Vorbecken 3 und umgekehrt.

Die Fig. 3a und 3b zeigen zwei mögliche Querschnitte von Rohrleitungen, wie sie beispielsweise für den Kondensierer 20, die Einlaufleitung 9, die Zufuhrrohrleitung 2, das Überlaufrohr 24, die Rohrleitungen eines von einem Wärmeträgermedium durchströmten Heizkörpers 18 usw. verwendet werden können. In Fig. 3a ist der Außenumfang dieser exemplarischen Rohrleitung mit Lamellen 26 versehen, in Fig. 3b mit Hohlrippen 27.

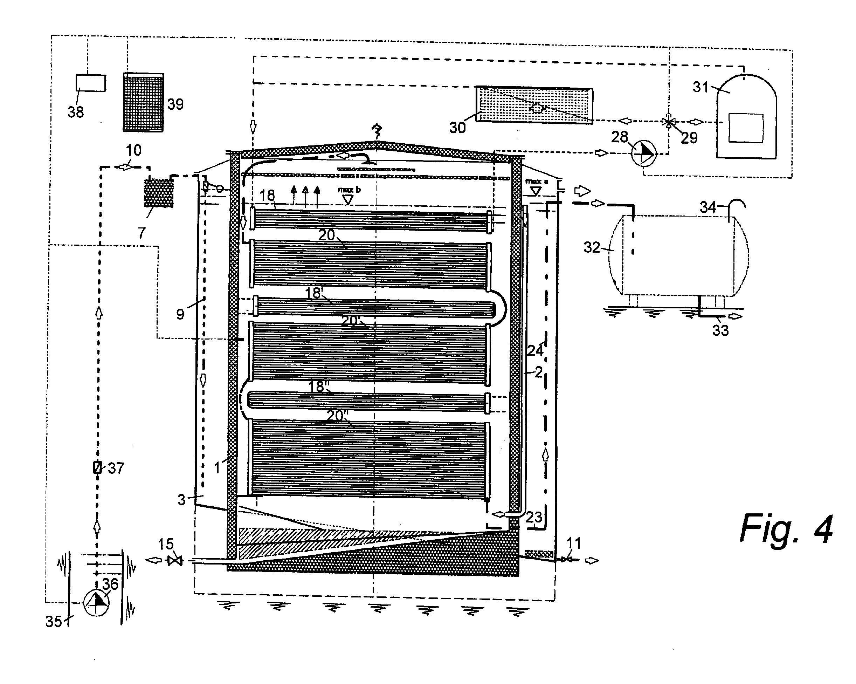

Fig. 4 zeigt eine alternative Ausführungsform der Anlage von Fig. 1a, wobei gleiche Elemente mit denselben Bezugszeichen bezeichnet sind. Im Gegensatz zu der Ausführungsform von Fig. 1a sind hier mehr als ein Heizkörper 18 und mehr als ein Kondensierer 20 vorgesehen, und zwar weitere Heizkörper 18' und 18" sowie Kondensierer 20' und 20". Die Heizkörper und Kondensierer sind alternierend übereinander angeordnet, wobei die Kondensierer 20, 20', 20" miteinander in Serie geschaltet sind. Die Heizkörper 18, 18' und 18" können - soferne sie von einem Wärmeträgermedium durchströmt sind - ebenfalls in Serie geschaltet sein, oder jeweils gesondert gespeist werden. In beiden Fällen nimmt die Betriebstemperatur der Heizkörper 18, 18', 18" von Heizkörper zu Heizkörper von oben nach unten ab. Beispielsweise beträgt die Betriebstemperatur des Heizkörpers 18 100°C, des Heizkörpers 18' ca. 80°C und des Heizkörpers 18" ca. 45°C. Dies ist besonders günstig, da damit auch Energieträger unterschiedlicher Nenntemperatur verwendet werden können, beispielsweise Fernwärme für den Heizkörper 18", Energie aus Solarkollektoren für den Heizkörper 18' und Energie aus Biomassekesseln für den Heizkörper 18. Auch können je nach Tages- und Jahreszeit und damit schwankender Nenntemperatur von z.B. Solarkollektoren einzelne Heizkörper zu-, ab- und umgeschaltet werden.

Zwei mögliche Formen der Speisung des Heizkörpers 18 sind in Fig. 4 dargestellt. Über eine Umwälzpumpe 28 und ein Umschaltventil 29 kann das den Heizkörper 18 durchströmende Wärmeübertragungsmedium in einem Sonnenkollektor 30 und/oder einem Biomassekessel 31 erwärmt werden.

Ferner ist in Fig. 4 ein Tank 32 zum Sammeln des entsalzten bzw. gereinigten Wassers dargestellt, der einen Anschluß 33 für den Verbraucher darbietet sowie über eine Entlüftung 34 verfügt. Darüber hinaus ist ein Erdbohrloch 35 gezeigt, aus dem Rohwasser über eine Ansaugpumpe 36 und ein Rückschlagventil 37 zum Anschluß 10 befördert wird.

Alle elektrisch steuerbaren Komponenten der Anlage wie Pumpen, Ventile, Sensoren usw. können von einer Programmsteuerung 38 gesteuert werden, die von einem Photovoltaikpanel 39 gespeist ist.

Die Fig. 5 und 6 zeigen noch eine weitere Ausführungsform der Anlage gemäß der Erfindung, wobei wieder gleiche Bezugszeichen dieselben Elemente bezeichnen. Die Anlage wird im Unterdruck betrieben, und eine Unterdruckpumpe 50 errichtet über Ansaugleitungen 41 einen Unterdruck von z.B. 160 mbar im Verdampfungsraum der Dampfphase 6, wodurch z.B. Meerwasser bei ca. 55°C siedet. Dadurch ist die Anlage für einen Betrieb mit solarkollektorgespeisten Heizkörpern 18 geeignet.

Der Verdampfungsraum ist in Zellen 42 unterteilt, und zwar über Schotte 43, die geringfügig in die flüssige Phase 4 eintauchen. In jeder der Zellen 42 befindet sich an der Decke 22 ein nach unten gekehrter Abtropfkegelstumpf 44, unter dem ein Auffangtrichter 45 liegt. Die Ausgänge aller Auffangtrichter 45 sind über eine Sammelleitung 46 zusammengefaßt und bilden den Eingang des Kondensierers 20.

An der Decke 22 jeder Zelle 42 ist ferner eine Einspritzdüse 47 zum Einspritzen von entsalztem bzw. gereinigtem Wasser, z.B. aus dem Tank 32 rezykliert in den Verdampfungsraum bzw. in die Dampfphase 6 angeordnet. Anstelle von entsalztem bzw. gereinigtem Wasser kann auch jedes andere kondensationsfördernde Mittel eingespritzt bzw. eingesprüht werden, z.B. Kühlluft, gereinigt über einen Luftabschneider. Eine Förderpumpe 48 speist die Einspritzdüsen 47.

Wenn ein flüssiges kondensationsförderndes Mittel verwendet wird, kann dieses auch mittels Eigendruck aus einem höhergelegenen Reservoir eingespeist werden, so daß die Förderpumpe 48 nicht erforderlich ist. Beispielsweise könnte der Süßwassertank 32 in entsprechender Höhe angeordnet werden, so daß Süßwasser von dort einfach durch den Falldruck den Einspritzdüsen 47 zugeführt wird.

Durch kontinuierliches impulsweises Einspritzen des kondensationsfördernden Mittels über die Einspritzdüsen 47 wird die Dampfphase 6 abgekühlt und tropft über die Abtropfkegelstumpfe 44 in die Auffangtrichter 45 der Kondensierer 20. Bei einem impulsweisen Einspritzen können die Einspritzdüsen 47 der Zellen 42 aufeinanderfolgend über Steuerventile 49 beaufschlagt werden, sodaß die Förderpumpe 48 im Dauerbetrieb laufen kann. Auch eine allfällige Saugpumpe 24', welche an den Ausgang 24 des Kondensierers 20 angeschlossen ist und das Kondensat in den z.B. höher gelegenen Tank 32 fördert, kann dadurch im Dauerbetrieb laufen.

Die Menge, die Temperatur und der Druck des kondensationsfördernden Mittels werden so gewählt, daß der Unterdruck und die Temperatur im Verdampfungsraum sich soweit ändern, daß die gewünschte Phasenänderung von Dampf zu Wasser erfolgt. Anderseits sollte die Veränderung des Unterdruckzustandes und der Temperatur nicht so groß sein, daß bei einem impulsweisen Einspritzen der Unterdruck in den Einspritzpausen nicht wieder aufgebaut werden könnte.

Auf diese Weise kann in jeder Zelle 42 ein stufenweiser, zyklischer Betrieb errichtet werden, der in den folgenden Stufen abläuft: a) Unterdruckaufbau, b) Verdampfung, c) Einspritzung, d) Phasenänderung von Dampf zu Wasser und e) Entfernung des produzierten Wassers. Bevorzugt werden die Stufen von Zelle zu Zelle versetzt, so daß z.B. in der einen Zelle der Unterdruckaufbau erfolgt, in der nächsten gleichzeitig die Verdampfung usw. Dadurch ergibt sich über alle Zellen gesehen im Mittel ein kontinuierlicher Betrieb, in dem alle Pumpen kontinuierlich laufen können.

Aus Fig. 5 ist ferner ersichtlich, daß der untere Abschnitt jedes Auffangtrichters 45 als kurze Rohrschlange ausgeführt ist, welche die obersten Wasserschichten unter der Grenzschicht 5 durchsetzt. Dadurch erfolgt bereits hier eine erste Wärmeabgabe an die flüssige Phase 4.

Bei einer im Unterdruckbereich arbeitenden Anlage ist das Vorbecken 3 bevorzugt geschlossen ausgeführt und die Einlaufleitung 9 geht über eine vertikale Höhe von einem tieferliegenden Vorrat, wie dem Erdbohrloch 35, dem Meeresspiegel usw. aus, der sich auf Umgebungsdruck befindet. Dadurch kann alleine mit Hilfe der Saughöhe der Unterdruckpumpe 50 das Flüssigkeitsniveau max b im Verdampfungsgefäß 1 eingestellt werden, ohne daß es zusätzlich Regelventile oder Druckminderventile in der Einlaufleitung 9 oder der Zufuhrleitung 2 bedarf. Der Niveauunterschied zwischen dem Wasserspiegel des Rohwasservorrates (z.B. Erdbohrloch 35) und dem Flüssigkeitsniveau max b im Verdampfungsgefäß beträgt bevorzugt - abhängig vom Luftdruck und der Umgebungstemperatur - 9 bis Meter (sog. "barometrische Höhe").

Die Erfindung ist selbstverständlich nicht auf die dargestellten Ausführungsbeispiele beschränkt, sondern umfaßt alle Varianten und Modifikationen, die in den Rahmen der angeschlossenen Ansprüche fallen.

## Patentansprüche

1. Anlage zur Entsalzung oder Reinigung von Rohwasser mittels Destillation, mit einem Verdampfungsgefäß (1) mit einem Heizkörper (18, 18', 18") zur Verdampfung des Rohwassers von der flüssigen Phase (4) in die Dampfphase (6), und einem nachgeschalteten Kondensierer (20, 20', 20") zur Kondensation der Dampfphase (6) zu entsalztem bzw. gereinigtem Wasser, wobei der Kondensierer (20, 20', 20") in die flüssige Phase (4) des Verdampfungsgefäßes (1) zwecks Wärmeaustauschs eintaucht, **dadurch gekennzeichnet, daß** der Heizkörper (18, 18', 18") im Bereich der Grenzschicht (5) zwischen flüssiger Phase (4) und Dampfphase (6) angeordnet ist und der Kondensierer (20, 20', 20") unterhalb des Heizkörpers (18, 18', 18") liegt.

2. Anlage nach Anspruch 1, **dadurch gekennzeichnet, daß** der Heizkörper (18) sich knapp unterhalb der genannten Grenzschicht (5) parallel zu dieser erstreckt.

3. Anlage nach einem der Ansprüche 1 bis 3, **dadurch gekennzeichnet, daß** zumindest zwei übereinander angeordnete Heizkörper (18, 18', 18") vorgesehen sind, zwischen denen jeweils ein Kondensierer (20, 20') liegt, wobei die Temperatur der Heizkörper (18, 18', 18") von Heizkörper zu Heizkörper nach unten hin abnimmt.

4. Anlage nach einem der Ansprüche 1 bis 3, **dadurch gekennzeichnet, daß** zumindest zwei übereinander angeordnete Kondensierer (20, 20', 20") vorgesehen sind, zwischen denen jeweils ein Heizkörper liegt, wobei die Kondensierer untereinander in Serie geschaltet sind.

5. Anlage nach einem der Ansprüche 1 bis 4, **dadurch gekennzeichnet, daß** zumindest ein Heizkörper (18, 18', 18") von einem Wärmeträgermedium durchströmt ist, das im Kreislauf durch einen Sonnenkollektor (30) und/oder Biomassekessel (31) geführt ist.

6. Anlage nach einem der Ansprüche 1 bis 5, **dadurch gekennzeichnet, daß** zumindest ein Heizkörper (18) eine elektrische Widerstandsheizung ist.

7. Anlage nach einem der Ansprüche 1 bis 6, **dadurch gekennzeichnet, daß** dem Verdampfungsgefäß (1) ein Vorbecken (3) vorgeschaltet ist, wobei das Verdampfungsgefäß (1) zwecks Wärmeaustauschs in das Vorbecken (3) eintaucht.

8. Anlage nach einem der Ansprüche 1 bis 7, **dadurch gekennzeichnet, daß** der Eingang des Kondensierers (20) durch eine Öffnung (21) an der Decke (22) des Verdampfungsgefäßes (1) gebildet ist.

9. Anlage nach den Ansprüchen 7 und 8, **dadurch gekennzeichnet, daß** der Ausgang (23) des Kondensierers (20) an ein Überlaufrohr (24) angeschlossen ist, welches durch das Vorbekken (3) geführt ist.

10. Anlage nach einem der Ansprüche 1 bis 9, **dadurch gekennzeichnet, daß** eine Unterdruckpumpe (50) vorgesehen ist, welche einen Unterdruck im Verdampfungsgefäß (1) errichtet.

11. Anlage nach Anspruch 10, **dadurch gekennzeichnet, daß** von der Decke (22) des Verdampfungsgefäßes (1) entsalztes bzw. gereinigtes Wasser, Kühlluft od.dgl. kondensationsförderndes Mittel in die Dampfphase (6) eingespritzt wird, wobei der Eingang des Kondensierers durch einen Auffangtrichter (45) gebildet wird, der bevorzugt unterhalb eines an der Decke (22) des Verdampfungsgefäßes (1) angeordneten Abtropfkegels oder -kegelstumpfes (44) angeordnet ist.

12. Anlage nach Anspruch 11, **dadurch gekennzeichnet, daß** das Einspritzen des kondensationsfördernden Mittels impulsweise in zeitlichen Abständen erfolgt.

13. Anlage nach Anspruch 11 oder 12, **dadurch gekennzeichnet, daß** mehrere Auffangtrichter (45) mit zugeordneten Abtropfkegeln bzw. -kegelstümpfen (44) nebeneinander angeordnet sind, die durch geringfügig in die flüssige Phase (4) eintauchende, derart Zellen bildende Schotte (43) voneinander getrennt sind.

14. Anlage nach den Ansprüchen 12 und 13, **dadurch gekennzeichnet, daß** das impulsweise Einspritzen des kondensationsfördernden Mittels aufeinanderfolgend von Zelle zu Zelle erfolgt.

15. Anlage nach einem der Ansprüche 10 bis 14, **dadurch gekennzeichnet, daß** das Verdampfungsgefäß (1) aus einem Vorrat (35) mit Rohwasser beschickt ist, der sich auf Umgebungsdruck befindet, und das Verdampfungsgefäß (1) in einer solchen Höhe über dem Vorrat (35) angeordnet ist, daß die Unterdruckpumpe (50) das Flüssigkeitsniveau (max b) der flüssigen Phase (4) im Verdampfungsgefäß (1) gewährleistet.
